Europäisches Patentamt

European Patent Office

Office européen des brevets

(19)

(11) Publication number: **0 071 252**
**B1**

## (12) EUROPEAN PATENT SPECIFICATION

(45) Date of publication of patent specification: **23.10.85**

(21) Application number: **82106798.0**

(22) Date of filing: **27.07.82**

(51) Int. Cl.⁴: **C 08 F 6/24,** C 08 F 6/08

(54) Method for deactivation treatment of catalysts.

(30) Priority: **28.07.81 JP 119005/81**

(43) Date of publication of application:
**09.02.83 Bulletin 83/06**

(45) Publication of the grant of the patent:
**23.10.85 Bulletin 85/43**

(84) Designated Contracting States:
**BE DE FR IT NL**

(56) References cited:
**GB-A-1 317 631**

(73) Proprietor: **SUMITOMO CHEMICAL COMPANY,
LIMITED
15 Kitahama 5-chome Higashi-ku
Osaka-shi Osaka 541 (JP)**

(72) Inventor: **Kawai, Kiyoshi
6-1-738, Kitajocho-4-chome
Toyonaka-shi (JP)**
Inventor: **Matsuda, Yoshinobu
2-1, Kuwatacho
Ibaraki-shi (JP)**
Inventor: **Hanji, Katsumi
2-1, Kuwatacho
Ibaraki-shi (JP)**
Inventor: **Yamamoto, Takanori
10-14-102, Sakurai-2-chome
Minoo-shi (JP)**
Inventor: **Baba, Kazuo
4-12, Aobadai-5-chome
Ichihara-shi (JP)**
Inventor: **Wakatsuki, Kizuku
8-60, Aobadai-1-chome
Ichihara-shi (JP)**

(74) Representative: **Vossius Vossius Tauchner
Heunemann Rauh
Siebertstrasse 4 P.O. Box 86 07 67
D-8000 München 86 (DE)**

Courier Press, Leamington Spa, England.

## Description

This invention relates to a method for the deactivation treatment of catalysts.

In conventional homopolymerization or copolymerization of olefins by the use of a so-called Ziegler-type catalyst, the polymerization mixture obtained after the intended polymerization has been completed is admixed with a large quantity of an alcohol or water to deactivate the catalyst in the polymerization mixture as well as to remove the catalyst residue from the polymerization mixture. Owing to the employment of such a large quantity of an alcohol or water, it becomes necessary to separate these materials as well as to rectify the recovered polymerization solvent and unreacted monomers for reuse. Recently, the advent of a so-called high-activity supported catalyst has made it possible to dispense with the step of removing catalyst residues. However, the deactivation treatment of catalyst is still necessary, because if it is omitted, the uncontrollable polymerization will proceed during the aftertreatment of polymerization mixture, resulting in problems such as fisheyes or incompatible particles in the final articles such as film and others. In spite of the simplification of the process by eliminating the step of removing catalyst residues thanks to the long-awaited advent of a high-activity catalyst, the use of a large quantity of an alcohol or water as in the conventional process offsets said advantage by the necessity of separating the alcohol or water and rectifying the recovered polymerization solvent and unreacted monomers for reuse.

Under the circumstances, there has been eagerly awaited the development of a simplified deactivation method in which the separation step for water or an alcohol is eliminated and the rectification step for the recovered solvent and monomers is unnecessary. The present inventors found that by using as the deactivation agent a metallic salt of a fatty acid which contains water, the deactivation can be effected with a very small amount of water in place of the large quantity used in the conventional process, and there is no adverse effect on the recovery of a polymerization solvent and unreacted monomer. This finding has led to the present invention.

An object of this invention is to provide an improved method for the deactivation treatment of the catalyst in a polymerization mixture obtained by the polymerization of an olefin with a Ziegler-type catalyst.

According to this invention there is provided a method for the deactivation treatment of a catalyst, which comprises allowing the polymerization mixture formed by polymerizing an olefin in the presence of a polymerization catalyst comprising a transition metal compound component and an organometallic compound component to contact a water-containing metallic salt of a fatty acid under conditions such that

$$400 \leqq \frac{XY}{Z} \leqq 9,000$$

wherein X is the quantity of said metallic salt in gram, Y is the water content of said metallic salt in weight percent, and Z is the number of moles of said organometallic compound in the polymerization mixture.

The present deactivation method has the following advantages:

(1) Water is used in an amount just sufficient for reacting with the organometallic compound to deactivate the catalyst, without needing a large amount of water used in a conventional method. Consequently, the step of separated water from the polymer is unnecessary. The polymerization solvent and the unreacted monomers can be recovered and reused in polymerization without rectification, because the recovered materials contain absolutely no water or so little that the polymerization activity is not affected.

(2) The fatty acid metallic salt is used in so small an amount that even if retained in the polymer, it does not cause problems such as occurrence of incompatible particles or fisheyes or of decreased transparency in final articles such as film.

(3) The fatty acid metallic salt acts also as a neutralizing agent against the halogen compounds formed from the catalyst and, in consequence, protects the metals from corrosion in the production plant and the processing unit.

The fatty acid metallic salts suitable for use in the present method include salts of higher fatty acids (from $C_8$ to $C_{22}$) with aluminum, calcium, magnesium, zinc, tin, sodium, and lithium, and mixtures of these salts. Particularly preferred of these salts are calcium stearate, calcium 12-hydroxystearate, sodium stearate, and zinc stearate.

In contacting with the polymerization mixture, the fatty acid metallic salts are used as such or as a suspension in hydrocarbon solvents. The suitable hydrocarbon solvents are those having 3 or more carbon atoms, preferably aliphatic saturated or olefinic hydrocarbons having 3 to 8 carbon atoms. Examples of particular compounds are propane, butane, pentane, hexane, heptane, octane, propylene, butene-1, pentene-1, hexene-1, heptene-1, octene-1 and mixtures thereof. If a hydrocarbon having more than 8 carbon atoms is used, it may, in some instances, remain in the polymer and impart an odor. The hydrocarbons are used in the lowest possible amount so long as the dispersion of fatty acid salts is not disturbed. A preferred amount is in the range of 10 to 1,000 times the weight of the fatty acid salt.

According to this invention, in contacting the polymerization mixture with the fatty acid salt, it is necessary that the following relation holds:

$$400 \leqq \frac{XY}{Z} \leqq 9,000$$

wherein X is the amount of the fatty acid salt in gram, Y is the water content, in weight percent, of said fatty acid salt, and Z is the number of moles of the organometallic compound in the polymerization mixture. If

$$\frac{XY}{Z}$$

is less than 400, the deactivation is not effected, while if

$$\frac{XY}{Z}$$

is larger than 9,000, although the deactivation is effected, the recovered solvent and monomer, when used as such, will cause a marked decline of the polymerization activity.

The water content Y and the amount X of a fatty acid metallic salt can be freely selected so long as the aforementioned

$$400 \leqq \frac{XY}{Z} \leqq 9,000$$

holds. It is, however, desirable to increase the water content Y and decrease the amount X in order to reduce the effect upon physical properties of the final article (occurrence of incompatible particles and fisheyes and decline in transparency). A suitable water content Y of a fatty acid metallic salt is 1 to 30%, preferably 3 to 25%, most preferably 6 to 20% by weight. For instance, when the quantity of the organometallic compound contained in the polymerization mixture is 1 mole, the values of X and Y are suitably selected so that the following relations may hold:

400≦XY≦9,000
20≦X≦500 (in terms of gram)
1≦Y≦30 (in terms of % by weight)

The water-containing metallic salt of a fatty acid is prepared by leaving the metallic salt to stand for several hours to several days under an atmosphere of saturated water vapor at room temperature or above. The determination of water content can be performed by the Karl Fischer's titration method for example.

The olefins to be polymerized include those having 2 to 8 carbon atoms, particularly ethylene, propylene, butene-1, pentene-1, 4-methylpentene-1, hexene-1 and octene-1. These olefins are used each alone or in mixtures of two or more.

The olefin polymerization catalyst suitable for the treatment according to this invention is that of the so-called Ziegler type comprising as one catalyst component a transition metal compound and as the other catalyst component an organoaluminum compound.

Examples of transition metal compounds include titanium compounds, vanadium compounds, and zirconium compounds such as titanium tetrachloride, titanium tetrabromide, titanium tetraiodide, titanium trichloride, alkoxytitanium halide compounds or aryloxytitanium halide compounds represented by the general formula $Ti(OR^1)_{4-p}X_p$ (wherein $R^1$ is a hydrocarbon radical, X is a halogen atom, and p is a number satisfying the formula 0>p>4), vanadium tetrachloride, vanadium oxytrichloride, zirconium tetrachloride, alkoxyzirconium halides or aryloxyzirconium halides represented by the general formula $Zr(OR^2)_{4-q}X_q$ (wherein $R^2$ is a hydrocarbon radical, X is a halogen atom, and q is a number satisfying the formula 0>q>4).

The present method is also useful for the supported Ziegler catalyst system in which the transition metal compound supported on a suitable carrier is used as a component of the catalyst system. Useful carriers are inorganic compounds such as oxides, hydroxides, chlorides, and carbonates of metals and silicon, and mixtures or double seats thereof. As examples there may be listed magnesium oxide, titanium oxide, silica, alumina, magnesium carbonate, hydroxychlorides of divalent metals, magnesium hydroxide, magnesium chloride, magnesium alkoxides, magnesium haloalkoxides, double oxide of magnesium and aluminum, and double oxide of magnesium and calcium. Of these, particularly preferred are magnesium compounds.

The present method is adaptable also to the catalyst system comprising the reaction product of an organomagnesium compound and a transition metal compound represented by the general formula $Ti(OR^3)_{4-r}X_r$ (wherein $R^3$ is a hydrocarbon radical, X is a halogen atom, and r is a number satisfying the formula 0≦r≦4) such as titanium tetrahalides alkoxytitanium compounds, aryloxytitanium compounds, alkoxytitanium halide compounds, or aryloxytitanium halide compounds.

The catalyst component of unsupported transition metal compound is described in, for example, Japanese Patent Application "Kokai" (laid-open) Nos. 34,478/72, 16,298/76, 20,986/76, 46,598/76, 110,793/77, 9,288/78, 125,986/75, 107,294/77, and 155,199/77.

Pertinent examples of the catalyst component of supported transition metal compound are described in Japanese Patent Publication Nos. 39,037/79, 40,273/79, 40,274/79, 23,561/80; Japanese Patent Application "Kokai" (Laid-open) Nos. 126,785/75, 84,884/76; Japanese Patent Application Nos. 51,641/79, 165,341/79, 9,200/80; Japanese Patent Application "Kokai" (Laid-open) No. 133,408/80.

The organometallic compounds used as the catalyst component which, together with the other catalyst component of transition metal compound, forms the polymerization catalyst system include trialkylaluminums such as triethylaluminum, tri - n - propylaluminum, triisobutylaluminum, tri-n-butylaluminum, and tri-n-hexylaluminum; dialkylaluminum mono-halides such as diethylaluminum monochloride, di-n-propylaluminum monochloride, diisobutyl-aluminum monochloride, di-n-butylaluminum monochloride, and di-n-hexylaluminum monochloride; alkylaluminum dihalides such as ethylaluminum dichloride, n-propylaluminum dichloride, isobutylaluminum dichloride, n-butylaluminum dichloride, and n-hexylaluminum dichloride; other organoaluminum compounds such as ethylaluminum sesquichloride, n-propylaluminum sesquichloride, isobutylaluminum sesquichloride, n-butylaluminum sesquichloride, and n-hexylaluminum sesquichloride; and organozinc compounds. These organometallic compounds are used each alone or in combinations.

The polymerization is carried out by the method of slurry polymerization, solution polymerization, or gas phase polymerization. The liquid phase polymerization such as solution or slurry polymerization is conducted preferably by supplying an olefin continuously to an inert solvent containing a transition metal compound and an organometallic compound at a reaction temperature of from room temperature to 250°C and a reaction pressure of from atmospheric to about 100 atmospheres. The polymerization temperature and pressure are not limited to the above ranges and higher temperatures and pressures may be used. When an α-olefin having 3 to 8 carbon atoms such as propylene, butene-1, or pentene-1 is used as the monomer, the liquid phase polymerization can be conducted by utilizing the monomer itself as solvent. A molecular weight regulator such as, for example, hydrogen can be used. The polymerization can be carried out either continuously or batch-wise. As examples of inert solvents used as polymerization solvents, mention may be made of aliphatic hydrocarbons such as propane, butane, pentane, hexane, heptane, and octane; alicyclic hydrocarbons such as cyclohexane and cycloheptane; and aromatic hydrocarbons such as benzene, toluene and xylene. These solvents are used each alone or in mixtures.

The contact of a fatty acid metallic salt with a polymerization mixture is effected by adding the metallic salt as such or suspended in a hydrocarbon to the polymerization mixture in a polymerization vessel or a polymerization terminating tank and mixing thoroughly by agitation. It is also possible to effect the contact by mixing a fatty acid metallic salt with a polymer cake obtained by separating á solid polymer from the polymerization mixture by centrifugation, filtration, flush evaporation, or other means.

The gas phase polymerization is carried out by the method of fluidized bed or of agitation at a polymerization temperature in the range of from room temperature to 100°C and a polymerization pressure in the range of from atmospheric to about 100 atmospheres. The contact of the polymerization mixture with a fatty acid metallic salt is effected similarly to the case of liquid phase polymerization described above.

The invention is further described below in detail with reference to Examples, but the invention is not limited thereto.

Example 1
(1) Synthesis of transition metal compound catalyst component.

Into a four-necked one-liter flask provided with a stirrer, reflux condenser, and dropping funnel, was placed 35.0 g of magnesium turnings for Grignard reagent. The flask was flushed thoroughly with nitrogen to remove completely the air and moisture. The dropping funnel was charged with 125 g of n-butyl chloride and 500 ml of di-n-butyl ether to form a solution. Onto the magnesium in the flask, was added dropwise about 30 ml of the solution through the dropping funnel to start the reaction. After the reaction had started, the dropwise addition was continued so as to allow the reaction to proceed smoothly until the end. The unreacted magnesium was removed by filtration through a glass filter.

A four-necked 100-ml flask provided with a stirrer, dropping funnel, and thermometer was flushed thoroughly with nitrogen to remove sufficiently the air and moisture. Into the flask was placed 23.8 ml (50 mmoles) of the solution of n-butylmagnesium chloride in di-n-butyl ether obtained above. Into the solution, while being stirred, was added slowly dropwise through the dropping funnel 8.5 g of silicon tetrachloride to form a white precipitate. After completion of the reaction, the precipitate was separated from the di-n-butyl ether by filtration and washed with 50 ml of purified n-heptane. The washing and filtration were repeated five times and the precipitate was dried in vacuo at room temperature to obtain 6.1 g of a white solid. In a four-necked 100-ml flask, 6.0 g of the white solid was dipped in 30 ml of titanium tetrachloride and heated at 100°C for one hour to allow the reaction to proceed. After completion of the reaction, the solid matter was washed repeatedly with n-heptane until no more titanium tetrachloride had been found in the washings to obtain 4.8 g of the transition metal compound catalyst component.

(2) Preparation of deactivation treatment agent.
A Petri dish containing 5 g of calcium stearate was left standing for 200 hours at room temperature in a tightly closed desiccator containing distilled water on the bottom. The initial water content of the calcium stearate was 0.8% by weight, as determined by the Karl Fischer method. After 200 hours of standing in the desiccator, the water content was 19.4% by weight. There was no appreciable change in properties (agglomeration and flowability) of the calcium stearate after having been left standing in the desiccator. Into 50 ml of heptane which had been thoroughly dehydrated by treating with Molecular Sieve® 4A, was suspended 470 mg of the calcium stearate. A 10-ml portion of the resulting suspension was used as the deactivation agent.

(3) Polymerization.

Into a 1-liter stainless steel autoclave provided with an electromagnetic induction stirrer, after having been thorouggly flushed with nitrogen and heated to 70°C, were added with stirring 500 ml of n-heptane, which had been thoroughly dehydrated and freed of oxygen, 2.0 mmole of triethylaluminum, and 5.1 mg of the solid catalyst component obtained above. After addition of hydrogen to a gage pressure of 5 kg/cm² (490 kPa), ethylene was fed to a gage pressure of 15 kg/cm² (1471 kPa) to commence the polymerization. The polymerization was continued for one hour at 70°C while maintaining the total pressure at 15 kg/cm² (1471 kPa) by replenishing with ethylene.

(4) Deactivation treatment.

After completion of the polymerization, the supply of ethylene was discontinued. A 10-ml portion of the suspension prepared in (2) above was forced into the autoclave by the nitrogen pressure at 30 kg/cm² (2942 kPa) (gage). Upon addition of the suspension the heat evolution in the autoclave quickly subsided and the decrease in the internal pressure of autoclave caused by the absorption of ethylene became no longer observable, indicating that the polymerization had been terminated by the deactivation of catalyst. The unreacted ethylene, hydrogen and nitrogen were then purged. The autoclave contents were removed, freed from the heptane by filtration, and dried in vacuo at 60°C to obtain 40 g of a polyethylene powder.

The dried powder was placed on a piece of SS-41 flat plate, which had been mirror-finished with #300 sandpaper, and hot pressed at 280°C and 150 kg/cm² (14710 kPa) (gage) for 3 minutes. The plate carrying the pressed sheet was kept overnight in a desiccator containing water. As a control, the SS-41 plate alone was similarly treated in the hot press and left standing overnight. On comparison, the two pieces of SS-41 plate revealed no difference in the degree of corrosion, indicating that the above polyethylene powder has no corrosive effect upon a granulator, injection molding machine, or the like.

Example 2

Polymerization was carried out in the same manner as in Example 1, except that the amount used of the same transition metal compound catalyst component as used in Example 1 was 3.8 mg; 150 g of butane and 100 g of butene-1 were used in place of 500 ml of n-heptane; and the polymerization temperature, hydrogen partial pressure, and ethylene partial pressure were 60°C, 5.0 kg/cm² (490 kPa) (gage), and 10 kg/cm² (981 kPa) (gage), respectively. The catalyst in the polymerization mixture was deactivated by the addition of 10 ml of the same suspension as used in Example 1. The heat evolution quickly subsided, indicating the termination of polymerization by the deactivation of the catalyst, 97 g of an ethylene-butene-1 copolymer in powder form was obtained.

Example 3

Polymerization and deactivation were carried out in the same manner as in Example 2, except that 3.5 mg of the transition metal compound catalyst component prepared in Example 1 was used and 500 mg of the humidified calcium stearate prepared in Example 1 was used as deactivation agent. The results obtained were as shown in Table 1. The yield of an ethylene-butene-1 copolymer in powder form was 89 g.

Example 4

Calcium stearate was humidified in the same manner as in Example 1, except that the humidification time was 50 hours. The water content was 5.0% by weight, as determined by the Karl Fischer titration method. A suspension of 360 mg of the humidified calcium stearate in 20 ml of heptane dehydrated as in Example 1 was used as the deactivation agent. The polymerization and deactivation were carried out in the same manner as in Example 2, except that 4.0 mg of the transition metal compound catalyst component prepared in Example 1 was used. The results obtained were as shwon in Table 1. The yield of an ethylene-butene-1 copolymer powder was 101 g.

Example 5

Into a 1-liter stainless steel autoclave provided with an electromagnetic induction stirrer, which had been thoroughly flushed with nitrogen, were charged 10.5 mg of commercial-grade titanium trichloride, 2.0 mmoles of diethylaluminum monochloride, and 300 g of liquefied propylene. The polymerization was allowed to proceed at 70°C for 4 hours. The deactivation was effected by the addition of 10 ml of the same suspension as used in Example 1. The results obtained were as shown in Table 1. The yield of polypropylene was 30.5 g.

Example 6

(1) Synthesis of transition metal compound catalyst component

Into a 500-ml flask provided with a stirrer, reflux condenser, and dropping funnel, was placed 17.2 g (0.7 mole) of powdered magnesium. The flask was heated at 120°C for 2 hours while passing dried nitrogen through the flask to remove completely the moisture adsorbed by the inner wall surfaces of the flask and the magnesium powder. Into the dropping funnel were charged 63 ml (0.6 mole) of n-butyl chloride and 347 ml of diethyl ether to form a solution. The solution was added dropwise onto the magnesium in the flask over a period of 75 minutes, while maintaining the internal temperature of the flask at 60°C. After completion of the dropwise addition, the reaction was allowed to proceed under reflux for further 60 minutes. The flask was cooled to room temperature and the unreacted magnesium was removed by filtration through a glass filter. The filtrate contained 1.48 moles of Grignard reagent per liter, as determined by hydrolyzing with 1 N aqueous sulfuric acid and titrating back with 1 N aqueous sodium hydroxide solution.

Into a 1-liter flask provided with a stirrer and a dropping funnel, which had been thoroughly flushed with dried nitrogen, were charged 500 ml of heptane and 39 g (0.17 mole) of tetraethoxytitanium. To the vigorously stirred heptane solution of tetraethoxytitanium in the flask were added dropwise through the dropping funnel 100 ml (0.14 mole) of the said diethyl ether solution of Grignard reagent over a period of about one hour while keeping the reaction system always at 3° to 4°C. After completion of the addition, the reaction was allowed to continue for 3 hours at room temperature. The reaction product became solidified and suspended in the medium. The suspended matter was allowed to settle, separated from the supernatant, washed 5 times with 100 ml of heptane, and dried to obtain 36 g of a solid reaction product of dark blue color.

(2) Preparation of deactivation agent.

In 10 ml of heptane dehydrated thoroughly with Molecular Sieve® 4A, was suspended 55 mg of the humidified calcium stearate prepared in Example 1. The resulting suspension was used as deactivation agent.

(3) Polymerization and deactivation.

Polymerization was carried out in the same manner as in Example 2, except that 6.6 mg of the transition metal compound component prepared above in (1) and 2 mmoles of diethylaluminum monochloride, as the organometallic compound component, were used. The deactivation was effected by adding the deactivating agent prepared above in (2). The results obtained were as shown in Table 1. The yield of an ethylene-butene-1 copolymer in powder form was 21 g.

Example 7

A humidified fatty acid metallic salt was prepared in the same manner as in Example 1, except that sodium stearate was used in place of the calcium stearate and the humidification time was 100 hours. The water content was 13.2% by weight, as determined by the Karl Fischer titration method. In 10 ml of heptane dehydrated thoroughly with Molecular Sieve® 4A, was suspended 137 mg of the humidified sodium stearate. The resulting suspension was used as deactivating agent. Polymerization was carried out in the same manner as in Example 2, except that the amount used of the transition metal compound component was 4.8 mg. The deactivation was effected by adding the deactivating agent prepared above. The results obtained were as shown in Table 1. The yield of an ethylene-butene-1 copolymers in powder form was 120 g.

Example 8
(1) Synthesis of transition metal compound catalyst component.

In a four-necked flask thoroughly flushed with nitrogen, 22.4 g of dried magnesium turnings and 14.4 ml of n-butyl chloride were allowed to react in 500 ml of n-heptane in the presence of 0.02 g of iodine at 90°C for 7 hours to yield a white fine granular reaction product. After completion of the reaction, the unreacted magnesium was removed from a suspension of the reaction product. The suspension was freed of the solvent by filtration and dried in vacuo to obtain a powder of n-butylmagnesium chloride which was found, on analysis, to contain 23.0% by weight of magnesium and 58.5% by weight of chlorine.

To a slurry of 5.4 g of the above powdered magnesium compound in 50 ml of n-heptane, was added 50 ml of a n-heptane solution containing 3.2 g of phenol. The mixture was allowed to react at about 25°C for one hour. After completion of the reaction, the mixture was freed from the solvent by filtration, then admixed with a mixture of 4.3 ml of diethyl ether and 100 ml of heptane. The resulting mixture was again allowed to react at about 25°C for one hour. The reaction product was separated by filtration, admixed with 21.0 ml of titanium tetrachloride while cooling at 0°C. The mixture was allowed to react at 136°C for 2 hours. After completion of the reaction, the resulting slurry was cooled to about 25°C and the reaction product was washed with n-heptane until disappearance of titanium tetrachloride in the washings. After drying in vacuo the resulting catalyst component was a pale reddish brown powder which was found, on analysis, to contain 2.4% by weight of titanium, 21.0% by weight of magnesium, and 66.0% by weight of chlorine.

(2) Polymerization

Into a 2-liter stainless steel autoclave, in which the air had been replaced by propylene, were charged 1.5 mmoles of triethylaluminum, 1.5 mmol of diethylaluminum chloride, 0.75 mmoles of ethyl p-anisate, and 600 ml of n-heptane which had been thoroughly dehydrated and purified. After addition of 43.8 mg of the solid catalyst component obtained above, 240 ml (standard state) of hydrogen was forced into the autoclave. The internal temperature of the autoclave was elevated to 60°C and the feeding of propylene was started. While maintaining the internal pressure of the autoclave at 10 kg/cm² (981 kPa) (gage) by replenishing with propylene, the polymerization was continued for one hour at 70°C.

(3) Deactivation treatment

After the polymerization had been continued for one hour as described above, 20 ml of a suspension of 1 g of powdered calcium stearate (2.4 wt.-% water content, prepared in the same manner as in Example 1) in n-heptane was forced into the autoclave by utilizing nitrogen pressure of 20 kg/cm² (1961 kPa) (gage), while the supply of propylene was continued. As soon as the suspension had been introduced into the autoclave, the weight decrease (as measured on a platform scale of 1 g reciprocal sensibility) of the cylinder supplying propylene became no longer observable, indicating that the polymerization had been terminated. After the decrease in weight of the cylinder had ceased to be observable, the temperature and pressure of the autoclave were maintained for one hour. The polypropylene which was formed was then removed from the autoclave and determined for the catalytic activity which was found to be 4,030 g polypropylene per g catalyst. This value coincided, within an error of 2%, with that obtained from another experiment in which the measurement was made after the termination of polymerization with a large volume of ethanol. It was confirmed that the polymerization was completely terminated with the water-containing calcium stearate according to this invention.

Example 9
(1) Polymerization.

Into a 2-liter stainless steel autoclave, in which the air had been replaced by propylene, were charged 3 mmoles of diethylaluminum chloride and 600 ml of n-heptane that had been thoroughly dehydrated and purified. After addition of 57.2 mg of a commercial-grade titanium trichloride catalyst component, 240 ml (standard state) of hydrogen was forced into the autoclave. When the internal temperature of the autoclave had been elevated to 60°C, the feeding of propylene was started. While maintaining the internal pressure of the autoclave at 6 kg/cm² (588 kPa) (gage) by replenishing with propylene, the polymerization was continued for 2 hours at 70°C.

(2) Deactivation treatment.

After the polymerization had been continued for 2 hours as described above, 20 ml of a suspension of 1.5 g of powdered sodium stearate (2.0 wt.-% water content; in n-heptane was forced into the autoclave by utilizing nitrogen pressure of 15 kg/cm² (1471 kPa) (gage), while the supply of propylene was sustained. As soon as the suspension had been introduced into the autoclave, the weight decrease of the cylinder supplying propylene became no longer observable, indicating that the polymerization had been terminated.

Example 10

Propylene was polymerized for one hour as in Example 8. The resulting slurry having a polymerization activity was transferred to a filtration tank provided with a stirrer to separate the polypropylene powder from the polymerization medium. 0.15 g of powdered calcium stearate, which had been adjusted to a water content of 8.3% by weight, was added to the polypropylene powder with stirring to terminate the polymerization. The polymer was dried under nitrogen stream at 100°C. The yield of dried polypropylene powder was 160 g. A corrosion test was performed in the same manner as in Example 1(4). It was confirmed that the powder has no corrosive effect on a granulator, injection molding machine, or the like.

Example 11

The polymerization and deactivation were carried out in the same manner as in Example 8, except that the water-containing calcium stearate was added to the polymerization mixture as suspended in nitrogen in place of heptane. It was found that the polymerization can be completely terminated by such a procedure.

Comparative Examples 1, 2 and 4

The polymerization and deactivation were carried out in the same manner as in Example 2, except that 3.1 to 5.0 mg of the same transition metal compound catalyst component as used in Example 1 were used and the deactivation agents were varied in composition and quantity as shown in Table 2. The results are also shown in Table 2.

Comparative Example 3

The deactivating agent was prepared by suspending 500 mg of calcium stearate, which had been dried for 8 hours in a vacuum dryer set at 90°C, in 20 ml of heptane that had been thoroughly dehydrated with Molecular Sieve® 4A. The polymerization was carried out in the same manner as in Example 2, except that 3.2 mg of the same transition metal compound catalyst component as used in Example 1 was used. The method of adding the deactivating agent was the same as in Example 2. The results obtained were as shown in Table 2. The yield of an ethylene-butene-1 copolymer powder was 81 g.

TABLE 1

| Example No. | Fatty acid metallic salt | | Hydro-carbon (ml) | Organo-metallic compound Z (mole) | $\dfrac{XY}{Z}$ (g/mole) | Olefin being polymerized | Deactivation ability |
| | X (g) | Water con-tent Y (wt.-%) | | | | | |
|---|---|---|---|---|---|---|---|
| 1 | Ca stearate 0.094 | 19.4 | Heptane 10 | $Al(C_2H_5)_3$ 0.002 | 912 | Ethylene | Termination of polymerization |
| 2 | Ca stearate 0.094 | 19.4 | " 10 | " 0.002 | 912 | Ethylene butene-1 | " |
| 3 | Ca stearate 0.5 | 19.4 | None | " 0.002 | 4850 | " | " |
| 4 | Ca stearate 0.36 | 5.0 | Heptane 20 | " 0.002 | 900 | " | " |
| 5 | Ca stearate 0.094 | 19.4 | " 10 | $Al(C_2H_5)_2Cl$ 0.002 | 912 | Propylene | " |
| 6 | Ca stearate 0.055 | 19.4 | " 10 | " 0.002 | 534 | Ethylene butene-1 | " |
| 7 | Na stearate 0.137 | 13.2 | " 10 | $Al(C_2H_5)_3$ 0.002 | 904 | " | " |

TABLE 2

| Compara-tive Example No. | Fatty acid metallic salt | | Hydro-carbon (ml) | Organo-metallic compound Z (mole) | $\dfrac{XY}{Z}$ (g/mole) | Olefin being poly-merized | Deactivation ability |
|---|---|---|---|---|---|---|---|
| | X (g) | Water con-tent Y (wt.-%) | | | | | |
| 1 | Ca stearate 0.031 | 19.4 | Heptane 10 | Al(C$_2$H$_5$)$_3$ 0.002 | 300 | Ethylene butene-1 | Same decrease in rate of polymerization; polymerization not terminated. |
| 2 | Ca stearate 1.034 | 19.4 | " 20 | " 0.002 | 10030 | " | Polymerization ter-minated, but the recovered solvent, when reused, inhited polymerization. |
| 3 | Ca stearate 0.5 | Undetected by Karl Fischer method | " 20 | " 0.002 | — | " | Polymerization not terminated; no change in rate of polymerization. |
| 4 | Ca stearate 2.8 | 8.1 | " 30 | " 0.002 | 11340 | " | Polymerization terminated, but the film (30 μ) made from the polymer showed a great number of incom-patible particles. |

## Claims

1. A method for the deactivation treatment of a catalyst, which comprises allowing the polymerization mixture formed by polymerizing an olefin in the presence of a polymerization catalyst comprising a transition metal compound component and an organometallic compound component to contact a water-containing metallic salt of a fatty acid under conditions such that

$$400 \leqq \frac{XY}{Z} \leqq 9,000$$

wherein X is the quantity of said metallic salt in gram, Y is the water content of said metallic salt in weight percent, and Z is the number of moles of said organometallic compound in the polymerization mixture.

2. A method according to claim 1, wherein said metallic salt of fatty acid is calcium stearate, calcium 12-hydroxystearate, zinc stearate or sodium stearate.

3. A method according to claim 1, wherein the water content Y of the metallic salt of fatty acid is 1 to 30% by weight.

4. A method according to claim 1, wherein the olefin is one member or a mixture of two or more members selected from the group consisting of ethylene, propylene, butene-1, pentene-1, 4-methylpentene-1, hexene-1 and octene-1.

5. A method according to claim 1, wherein the contact between the metallic salt of fatty acid and the polymerization mixture is effected by adding said metallic salt as such or suspended in a hydrocarbon to a polymerization vessel or a polymerization terminating tank, and mixing with the polymerization mixture by agitation.

## Patentansprüche

1. Verfahren zur Desaktivierungsbehandlung eines Katalysators, dadurch gekennzeichnet, daß man das durch Polymerisation eines Olefins in Gegenwart eines eine Übergangsmetallverbindungskomponente und eine organometallische Verbindungskomponente umfassenden Polymerisationskatalysators hergestellte Polymerisationsgemisch mit einem wasserhaltigen Metallsalz einer Fettsäure unter derartigen Bedingungen in Berührung kommen läßt, daß

$$400 \leqq \frac{XY}{Z} \leqq 9.000$$

wobei X die Menge des genannten Metallsalzes in Gramm, Y der Wassergehalt des genannten Metallsalzes in Gewichtsprozent und Z die Molzahl der genannten organometallischen Verbindungen im Polymerisationsgemisch bedeuten.

2. Verfahren nach Anspruch 1, wobei das Metallsalz der Fettsäure Calciumstearat, Calcium-12-hydroxystearat, Zinkstearat oder Natriumstearat ist.

3. Verfahren nach Anspruch 1, wobei der Wassergehalt Y des Metallsalzes der Feetsäure 1 bis 30 Gewichtsprozent beträgt.

4. Verfahren nach Anspruch 1, wobei das Olefin Äthylen, Propylen, Buten-1, Penten-1, 4-Methylpenten-1, Hexen-1 und/oder Octen-1 oder ein Gemisch aus zwei oder mehreren dieser Stoffe ist.

5. Verfahren nach Anspruch 1, wobei die Berührung zwischen dem Metallsalz der Fettsäure und dem Polymerisationsgemisch durch Einspeisen des Metallsalzes als solches oder suspendiert in einem Kohlenwasserstoff in das Polymerisationsgefäß oder in einen Polymerisations-Beendigungstank und Mischen mit dem Polymerisationsgemisch durch Rühren bewirkt wird.

## Revendications

1. Procédé pour le traitement de désactivation d'un catalyseur, consistant à laisser le mélange de polymérisation formé par polymérisation d'une oléfine en présence d'un catalyseur de polymérisation comprenant un composant constitué par un composé de métal de transition et un composant constitué par un composé organométallique, entrer en contact avec un sel métallique d'un acide gras contenant de l'eau, dans des conditions telles que soit respectée la relation

$$400 \leqq \frac{XY}{Z} \leqq 9000$$

dans laquelle X est la quantité en grammes du sel métallique, Y est la teneur en eau du sel métallique en pourcentage en poids et Z est le nombre de mole du composé organométallique dans le mélange de polymérisation.

2. Procédé selon la revendication 1, dans lequel le sel métallique d'acide gras est le stéarate de calcium, le 12-hydroxystéarate de calcium, le stéarate de zinc ou le stéarate de sodium.

3. Procédé selon la revendication 1, caractérisé en ce que la teneur en eau Y du sel métallique d'acide gras est comprise entre 1 et 30% en poids.

4. Procédé selon la revendication 1, dans lequel l'oléfine est un membre ou un mélange de deux membrane ou plus choisis dans le groupe constitué par l'éthylène, le propylène, le butène-1, le pentène-1, le 4-méthylpentène-1, l'hexène-1 et l'octène-1.

5. Procédé selon la revendication 1, dans lequel le contact entre le sel métallique d'acide gras et le mélange de polymérisation est effectué par addition du sel métallique, tel quel ou en suspension dans un hydrocarbure, dans un récipient de polymérisation ou un réservoir d'arrêt de polymérisation, et par mélange avec le mélange de polymérisation par agitation.